**Europäisches Patentamt**

**European Patent Office**

**Office européen des brevets**

(19)

(11) **EP 1 471 303 A2**

(12) **EUROPÄISCHE PATENTANMELDUNG**

(43) Veröffentlichungstag:
**27.10.2004 Patentblatt 2004/44**

(51) Int Cl.⁷: **F21S 8/08**, F21V 15/04
// F21W131:103

(21) Anmeldenummer: **04009824.6**

(22) Anmeldetag: **26.04.2004**

(84) Benannte Vertragsstaaten:
**AT BE BG CH CY CZ DE DK EE ES FI FR GB GR HU IE IT LI LU MC NL PL PT RO SE SI SK TR**
Benannte Erstreckungsstaaten:
**AL HR LT LV MK**

(30) Priorität: **24.04.2003 DE 20306418 U**

(71) Anmelder:
• **Maass, Christian**
  **46483 Wesel (DE)**
• **Spaltmann, Horst**
  **46487 Wesel (DE)**

(72) Erfinder:
• **Maass, Klaus-Dieter**
  **47495 Rheinberg (DE)**
• **Hortmanns, Michael, Dr.**
  **41464 Neuss (DE)**
• **Spaltmann, Horst**
  **46487 Wesel (DE)**

(74) Vertreter: **Stenger, Watzke & Ring Patentanwälte**
**Kaiser-Friedrich-Ring 70**
**40547 Düsseldorf (DE)**

(54) **Vorrichtung für die Verlängerung der Standzeit von Leuchtmitteln**

(57) Die Erfindung betrifft eine Vorrichtung für die Verlängerung der Standzeit von Leuchtmitteln in Straßenbeleuchtungseinrichtungen (9), insbesondere in Straßenlaternen auf Brücken (1). Um eine Vorrichtung für die Verlängerung der Standzeit von Leuchtmitteln in Straßenbeleuchtungseinrichtungen (9) zu schaffen, die bei einem nur geringen wirtschaftlichen Mehraufwand die mechanische Belastung der in den Straßenbeleuchtungseinrichtungen (9) angeordneten Leuchtmittel zu verringern hilft und die in einfacher und kostengünstiger Weise eine Nachrüstung für bereits bestehende Straßenbeleuchtungseinrichtungen (9) ermöglicht, wird mit der Erfindung vorgeschlagen eine Vorrichtung für die Verlängerung der Standzeit von Leuchtmitteln in Straßenbeleuchtungseinrichtungen (9), insbesondere in Straßenlaternen auf Brücken, die ein Schwingungsdämpfungselement (15) aufweisen, das an der Straßenbeleuchtungseinrichtung (9) angeordnet und die zweite Resonanzfrequenz (Oberton) der Straßenbeleuchtungseinrichtung (9) dämpfend ausbildet.

Fig. 1

EP 1 471 303 A2

**Beschreibung**

Die Erfindung betrifft eine Vorrichtung für die Verlängerung der Standzeit von Leuchtmitteln in Straßenbeleuchtungseinrichtungen, insbesondere in Straßenlaternen auf Brücken.

Straßenbeleuchtungseinrichtungen sind aus dem Stand der Technik an sich bekannt und haben sich seit Jahrhunderten in der Praxis bewährt. Angeordnet werden Straßenbeleuchtungseinrichtungen in der Regel links- und/oder rechtsseitig einer Straße, eines Fuß- oder Fahrradweges und dienen der Ausleuchtung der- oder desselben. Je nach Verwendungszweck und Standort können die Straßenbeleuchtungseinrichtungen eine im Detail unterschiedliche Ausgestaltung aufweisen, verfügen dem Grunde nach jedoch zumeist über einen im Boden verankerten Mast sowie über ein kopfseitig am Mast angeordnetes Kopfelement, welches unter anderem ein oder mehrere Leuchtmittel aufnimmt. Diese Art der Ausgestaltung von Straßenbeleuchtungseinrichtungen hat sich insbesondere deswegen bewährt, weil eine Ausleuchtung der Straße, des Fuß- oder Fahrradweges von oben erfolgt, was eine optimierte Ausleuchtung bewirkt und nicht zu Blendwirkungen der am Straßenverkehr teilnehmenden Personen führt. Als Leuchtmittel werden in aller Regel Fadenglühbirnen oder solche mit einem Glaskolben eingesetzt.

Bei Straßenbeleuchtungseinrichtungen, die aus einem Mast und einem daran angeordneten Kopfelement bestehen, ergibt sich jedoch der Nachteil, daß es infolge von auftretenden Schwingbewegungen des Mastes zu derart starken Erschütterungen auch im Kopfelement kommen kann, daß die dort angeordneten Leuchtmittel zerbersten, was in der Konsequenz zum Ausfall der Straßenbeleuchtungseinrichtung führt. Häufigste Versagensart bei der Verwendung von Fadenglühbirnen als Leuchtmittel ist das Reißen des Glühfadens. Bei Leuchtmitteln mit Glaskolben bricht in nachteiliger Weise der Glaskolben.

Schwingbewegungen des Mastes der Straßenbeleuchtungseinrichtung können sich aus dynamischen Beanspruchungen, wie zum Beispiel aus Verkehr, Wind und Regen ergeben. Auch Vandalismus, zum Beispiel das Gegentreten oder Gegenfahren gegen den Mast einer Straßenbeleuchtungseinrichtung führt zu dynamischen Schwingbewegungen, die dazu führen, daß die im Kopfelement angeordneten Leuchtmittel zerstört werden. Auch bei einer stochastischen Belastung, zum Beispiel durch böenartige Winde oder harmonische Belastungen, wie z. B. wirbelerregte Querschwingungen, kommt es in aller Regelmäßigkeit bei den aus dem Stand der Technik bekannten Straßenbeleuchtungseinrichtungen zu schwingungsbedingten Aufschwingvorgängen des Mastes, die für die gesamte Straßenbeleuchtungseinrichtung eine starke Belastung darstellen. Zwar ist die Straßenbeleuchtungseinrichtung in ihrer Konstruktion auf derlei Schwingbewegungen und -belastungen ausgerichtet, so daß es nicht zu einer Zerstörung der Straßenbeleuchtungseinrichtung als solche kommt, die Zerstörung der im Kopfelement angeordneten, zerbrechlichen Leuchtmittel kann jedoch mit den aus dem Stand der Technik bekannten Straßenbeleuchtungseinrichtungen nicht vermieden werden. Dies gilt insbesondere bei der Verwendung von Fadenglühbirnen als Leuchtmittel oder solchen mit Glaskolben, da schon geringe Erschütterungen zum Reißen des Glühfadens oder zum Brechen des Glaskolbens führen können.

Die aus dem Stand der Technik bekannten Straßenbeleuchtungseinrichtungen weisen mit Bezug auf die unter normalen Betriebsbedingungen auftretenden Schwingungsanregungen, beispielsweise durch Wind oder Regen, eine nur geringe Strukturdämpfung auf, die nicht ausreichend ist, die auftretenden Schwingungen derart abzufangen, daß eine Zerstörung insbesondere der Leuchtmittel wirkungsvoll vermieden werden könnte.

Da die Kontrolle auf Funktionstüchtigkeit von Straßenbeleuchtungseinrichtungen bzw. der Austausch von defekten Leuchtmitteln die öffentlichen Kassen jährlich mit immensen Summen belastet, sind in der Vergangenheit vielfach Anläufe unternommen worden, die infolge von Schwingbewegungen der Straßenbeleuchtungseinrichtung auftretenden Zerstörungen der in der Straßenbeleuchtungseinrichtung angeordneten Leuchtmittel zu unterbinden. Vorgeschlagen wurde beispielsweise, Straßenbeleuchtungseinrichtungen zukünftig stabiler, das heißt unter höherem Materialeinsatz auszubilden. In nachteiliger Weise werden jedoch durch diese Maßnahmen erheblich höhere Anschaffungs- bzw. Herstellkosten verursacht, wobei sich auch bei einer stabileren Ausgestaltung der Straßenbeleuchtungseinrichtungen nicht sämtliche Schwingungsprobleme lösen lassen. Insbesondere bei einer wechselnden Belastung der Straßenbeleuchtungseinrichtung im Resonanzbereich, die beispielsweise durch einfache Windböen erzeugt werden, kann es zu starken Schwingungen führen, die auch bei einer unter erhöhtem Materialeinsatz ausgebildeten Straßenbeleuchtungseinrichtung eine Zerstörung der Leuchtmittel bewirken.

Auch wurden in der Vergangenheit Anstrengungen dahingehend unternommen, eine Dämpfungserhöhung bei Straßenbeleuchtungseinrichtungen durch die Anordnung einer direkten Dämpfung zu erzielen. Dies läßt sich in nachteiliger Weise jedoch nur dann erreichen, wenn das schwingende Bauteil der Straßenbeleuchtungseinrichtung, das heißt der das Kopfelement tragende Mast, mittels eines dämpfenden Elements an einen Fixpunkt gekoppelt werden kann. Ein solcher Fixpunkt steht in der Regel jedoch nicht zur Verfügung, so daß dieser Lösungsansatz schon aus architektonischen Gründen in der überwiegenden Mehrzahl der Anwendungsfälle ausscheidet. Zudem ist die Anordnung einer direkten Dämpfung sehr kostspielig.

Das vorbeschriebene Problem der Leuchtmittelzerstörung in Straßenbeleuchtungseinrichtungen als Folge des Auftretens von Schwingbewegungen ist insbesondere bei auf Brücken angeordneten Straßenbeleuchtungseinrichtungen gegeben. In keinster Weise geschützt vor äußeren Witterungseinflüssen sind die auf Brücken angeordneten Straßenbeleuchtungseinrichtungen besonders anfällig für durch Wind oder Regen induzierte Schwingungen. Insbesondere auf Brücken kommt es daher häufig zu einem Ausfall der Straßenbeleuchtungseinrichtungen, was natürlich insofern ein besonderes Sicherheitsrisiko darstellt, als daß Brücken baulich begrenzt sind und zum Teil mehrere hundert Meter oberhalb des Bodens verlaufen können. Durch eine schlechte Ausleuchtung der Brücke bedingte Unfälle können daher sehr fatale Folgen für die Unfallteilnehmer haben. Mithin ist es schon aus sicherheitsrelevanten Gründen erforderlich, die Funktionstüchtigkeit von auf Brücken angeordneten Straßenbeleuchtungseinrichtungen dauerhaft gewährleisten zu können.

Hiervon ausgehend ist es **Aufgabe** der Erfindung, eine Vorrichtung für die Verlängerung der Standzeit von Leuchtmitteln in Straßenbeleuchtungseinrichtungen zu schaffen, die bei einem nur geringen wirtschaftlichen Mehraufwand die mechanische Belastung der in den Straßenbeleuchtungseinrichtungen angeordneten Leuchtmittel zu verringern hilft. Zudem soll in einfacher und kostengünstiger Weise eine Nachrüstung für bereits bestehende Straßenbeleuchtungseinrichtungen möglich sein.

Zur **Lösung** dieser Aufgabe wird mit der Erfindung vorgeschlagen eine Vorrichtung für die Verlängerung der Standzeit von Leuchtmitteln in Straßenbeleuchtungseinrichtungen, insbesondere in Straßenlaternen auf Brücken, aufweisend ein Schwingungsdämpfungselement, das an der Straßenbeleuchtungseinrichtung angeordnet und die zweite Resonanzfrequenz (Oberton) der Straßenbeleuchtungseinrichtung dämpfend ausgebildet ist.

Ausgangspunkt für die erfindungsgemäße Vorrichtung ist die Erkenntnis, daß bei Straßenbeleuchtungseinrichtungen der vorgenannten Art auftretende Schwingungen durch die Anordnung eines Schwingungsdämpfungselements in hinreichender Weise derart abgedämpft werden können, daß die auf die in der Straßenbeleuchtungseinrichtung angeordneten Leuchtmittel einwirkende mechanische Belastung derart weit reduziert werden kann, daß es nicht zu einer Zerstörung derselben kommt. Mit der Anordnung eines Schwingungsdämpfungselements kann mithin in vorteilhafter Weise erreicht werden, daß die infolge einer beispielsweise durch Witterungsumstände erfolgte Schwingungsanregung der Straßenbeleuchtungseinrichtung abgedämpft werden kann und es infolgedessen nicht, wie bei den aus dem Stand der Technik bekannten Straßenbeleuchtungseinrichtungen, zu einer Zerstörung der Leuchtmittel kommt.

Angeregt durch äußere Umstände, wie zum Beispiel Verkehr, Regen, Wind oder dergleichen, werden Straßenbeleuchtungseinrichtungen in Schwingung versetzt. Kritisch sind dabei insbesondere solche Schwingungen, deren Frequenz einer der Resonanzfrequenzen der Straßenbeleuchtungseinrichtung entspricht. Zu unterscheiden sind in diesem Zusammenhang die erste Resonanzfrequenz der Straßenbeleuchtungseinrichtung, der sogenannte Grundton, und die zweite Resonanzfrequenz der Straßenbeleuchtungseinrichtung, der sogenannte Oberton. Je nach baulicher Ausgestaltung der Straßenbeleuchtungseinrichtung ergibt sich der Grundton bei einer Frequenz von unter 3 Hertz, beispielsweise bei ca. 2 Hertz und der Oberton bei einer Frequenz von über 8 Hertz, beispielsweise bei ca. 10 Hertz.

Untersuchungen haben gezeigt, daß insbesondere der Oberton, das heißt die zweite Resonanzfrequenz der Straßenbeleuchtungseinrichtung, für die Zerstörung der im Kopfelement der Straßenbeleuchtungseinrichtung angeordneten Leuchtmittel von maßgeblicher Bedeutung ist. Erfindungsgemäß ist daher vorgesehen, daß zur Lösung der vorgenannten Aufgabe eine Vorrichtung vorgeschlagen wird, die ein an der Straßenbeleuchtungseinrichtung angeordnetes Schwingungsdämpfungselement aufweist, das die zweite Resonanzfrequenz der Straßenbeleuchtungseinrichtung dämpfend ausgebildet ist.

Weniger kritisch, gleichwohl aber mit Blick auf die Verlängerung der Standzeit der in einer Straßenbeleuchtungseinrichtung angeordneten Leuchtmittel von Bedeutung ist die erste Resonanzfrequenz, der sogenannte Grundton der Straßenbeleuchtungseinrichtung. Zur Dämpfung auch dieser Resonanzfrequenz verfügt die erfindungsgemäße Vorrichtung über ein weiteres Schwingungsdämpfungselement, das an der Straßenbeleuchtungseinrichtung angeordnet und die erste Resonanzfrequenz der Straßenbeleuchtungseinrichtung dämpfend ausgebildet ist. Gemäß diesem Vorschlag der Erfindung verfügt die erfindungsgemäße Vorrichtung über ein erstes und ein weiteres, zweites Schwingungsdämpfungselement, wobei das erste Schwingungsdämpfungselement die zweite Resonanzfrequenz und das zweite Schwingungsdämpfungselement die erste Resonanzfrequenz der Straßenbeleuchtungseinrichtung abdämpft.

Gemäß einem besonderen Vorschlag der Erfindung sind das erste Schwingungsdämpfungselement zur Dämpfung der zweiten Resonanzfrequenz der Straßenbeleuchtungseinrichtung und das weitere, zweite Schwingungsdämpfungselement zur Dämpfung der ersten Resonanzfrequenz der Straßenbeleuchtungseinrichtung zu einer gemeinsamen Schwingungsdämpfungseinheit miteinander kombiniert. Diese aus erstem und zweitem Schwingungsdämpfungselement gebildete Schwingungsdämpfungseinheit ermöglicht mithin eine Dämpfung sowohl der ersten als auch der zweiten Resonanzfrequenz der Straßenbeleuchtungseinrichtung. Die Zusammenfassung von erstem und zweitem Schwingungsdämpfungselement zu einer gemeinsamen Schwingungsdämpfungseinheit ist insbesondere aus betriebswirtschaftlichen Gründen von Vorteil, denn kann die Schwingungsdämpfungseinheit als einzelnes Bauteil auf einfache Weise an der Straßenbeleuchtungseinrichtung bedarfsgerecht angeordnet werden. Dabei kann die Schwingungsdämpfungseinheit herstellungsseitig derart vorausgebildet sein, daß es für eine wunschgemäße Abdämpfung der Straßenbeleuchtungseinrichtung lediglich noch erforderlich ist, mittels einer einfach durchzuführenden Montage die Schwingungsdämpfungseinheit an einer hinsichtlich ihrer Schwingbewegungen abzudämpfenden Straßenbeleuchtungseinrichtung anzuordnen.

Da insbesondere eine Schwingungsanregung der Straßenbeleuchtungseinrichtung im Bereich der zweiten Resonanzfrequenz der Straßenbeleuchtungseinrichtung zu einer Zerstörung der in der Straßenbeleuchtungseinrichtung angeordneten Leuchtmittel führt, weist die erfindungsgemäße Vorrichtung ein Schwingungsdämpfungselement zur Dämpfung eben dieser zweiten Resonanzfrequenz auf. Zwecks Dämpfung auch der ersten Resonanzfrequenz der Straßenbeleuchtungseinrichtung verfügt die erfindungsgemäße Vorrichtung vorzugsweise über ein weiteres Schwingungsdämpfungselement, wobei das erste Schwingungsdämpfungselement und das weitere Schwingungsdämpfungselement zu einer gemeinsamen Schwingungsdämpfungseinheit miteinander kombiniert sind. Damit vermag die aus erstem und zweitem Schwingungselement gebildete Schwingungsdämpfungseinheit sowohl die erste als auch die zweite Resonanzfrequenz der Straßenbeleuchtungseinrichtung abzudämpfen.

Je nach Bauart der Straßenbeleuchtungseinrichtung stellen sich unterschiedliche Resonanzfrequenzen sowohl für die erste als auch für die zweite Resonanzfrequenz ein. Um gleichwohl für unterschiedlich ausgebildete Straßenbeleuchtungseinrichtungen die erfindungsgemäße Vorrichtung unverändert gleichsam wirkungsvoll einsetzen zu können, sind die mit der erfindungsgemäßen Vorrichtung vorgesehenen Schwingungsdämpfungselemente an die Resonanzfrequenzen unterschiedlich ausgebildeter Straßenbeleuchtungseinrichtungen dynamisch anpaßbar. Ein- und dieselbe Vorrichtung kann mithin in vorteilhafter Weise bestimmungsgemäß für unterschiedlich ausgebildete Straßenbeleuchtungseinrichtungen gleichsam eingesetzt werden.

Zwecks dynamischer Anpassung der mit der erfindungsgemäßen Vorrichtung eingesetzten Schwingungsdämpfungselemente an die sich infolge der Bauform der Straßenbeleuchtungseinrichtung in unterschiedlicher Weise einstellenden Resonanzfrequenzen der Straßenbeleuchtungseinrichtung wird mit der Erfindung vorgeschlagen, daß das weitere Schwingungsdämpfungselement zur Dämpfung der ersten Resonanzfrequenz der Straßenbeleuchtungseinrichtung als Flüssigkeit-Schwingungsdämpfungselement ausgebildet ist. Zu diesem Zweck ist das weitere Schwingungsdämpfungselement aus einer Mehrzahl von mit einer Flüssigkeit, beispielsweise Wasser, befüllten Behältern ausgebildet, die an der Straßenbeleuchtungseinrichtung angeordnet werden. Kommt es zu einer Schwingbelastung der Straßenbeleuchtungseinrichtung, so wird die Schwingbewegung der Straßenbeleuchtungseinrichtung gleichfalls auf die in den Behältern vorgesehene Flüssigkeit übertragen, die dann ihrerseits in eine Schwingbewegung versetzt wird, was bezogen auf die Flüssigkeit bedeutet, daß diese eine Welle, nämlich eine sogenannte "Schwappwelle" ausbildet. Diese Welle läuft über die Flüssigkeitsoberfläche der im Behälter vorgesehenen Flüssigkeit und prallt mit Erreichen des Behälterendes an die dort vorgesehene Behälterwand. Im Augenblick des Auftreffens der Schwappwelle auf die Behälterwand wird der größte Teil der in der Welle gespeicherten Bewegungsenergie dissipiert. Dies geschieht zum einen durch die hydrodynamische Kraft der Welle als Gegenschwinger und zum anderen durch das "Zerplatzen" der Welle, wenn sich diese an der Behälterwand bricht. Die Dämpfungscharakteristik der schwappenden Flüssigkeit hat dabei in vorteilhafter Weise zur Folge, daß bereits bei kleinen Amplituden das größte Dämpfungsdekrement auftritt. Für die insbesondere querschwingungsgefährdeten Straßenbeleuchtungseinrichtungen ergibt sich hieraus, daß gerade zu Beginn eines Aufschaukelvorgangs die Dämpfung besonders groß ist, so daß die Straßenbeleuchtungseinrichtung erst gar nicht zu größeren Amplituden aufgeschaukelt wird. Dies ist insbesondere für Straßenlaternen auf Brücken von Vorteil, da hierdurch erreicht wird, daß bereits beispielsweise durch Regen und Wind bedingte Schwingungen derart frühzeitig so weit abgedämpft werden können, daß Schwingbewegungen, die eine Zerstörung der in der Straßenbeleuchtungseinrichtung angeordneten Leuchtmittel zur Folge hätte, von vornherein vermieden werden können. Von Vorteil eines als Flüssigkeits-Dämpfers ausgebildeten Schwingungsdämpfungselements ist des weiteren, daß dieser gleichsam effektiv für unterschiedlich ausgebildete Straßenbeleuchtungseinrichtungen unverändert eingesetzt werden kann, da unabhängig von der baulichen Ausgestaltung der Straßenbeleuchtungseinrichtung eine bestimmungsgemäße Dämpfung der Straßenbeleuchtungseinrichtung erzielt wird. Das als Flüssigkeits-Dämpfer ausgebildete Schwingungsdämpfungselement paßt sich mithin dynamisch an die sich infolge der geometrischen Ausgestaltung der Straßenbeleuchtungseinrichtung auftretenden Resonanzfrequenzen an.

Das Schwingungsdämpfungselement zur Dämpfung der zweiten Resonanzfrequenz der Straßenbeleuchtungseinrichtung weist gemäß einem weiteren Merkmal der Erfindung eine schwingend gelagert angeordnete Dämpfermasse auf. Ausgebildet ist dieses Schwingungsdämpfungselement nach Art eines Pendels, wobei die Dämpfermasse zwecks schwingend gelagerter Anordnung endseitig eines Schwingungselements angeordnet ist. Für eine dynamische Auslegung des Schwingungsdämpfungselements zur Dämpfung der zweiten Resonanzfrequenz der Straßenbeleuchtungseinrichtung ist das Schwingungselement samt daran angeordneter Dämpfermasse in einem der mit Flüssigkeit befüllten Behälter des weiteren Schwingungsdämpfungselements angeordnet. Die Dämpfermasse des ersten Schwingungsdämpfungselements ist in die Flüssigkeit eines der mit Flüssigkeit befüllten Behälter des zweiten Schwingungsdämpfungselements eingetaucht, wobei die Länge des beispielsweise als Seil, Faden oder Biegefeder ausgebildeten Schwingungselements die Dämpferfrequenz des als Pendel ausgebildeten ersten Schwingungsdämpfungselements bestimmt. Die Länge des Schwingungselements ist daher derart zu bemessen, daß das erste Schwingungsdämpfungselement eine Dämpfung der Straßenbeleuchtungseinrichtung im Hochfrequenzbereich von über 8 Hertz, beispielsweise von ca. 10 Hertz bewirkt. Erreicht wird hierdurch eine Dämpfung der Straßenbeleuchtungseinrichtung im Bereich der zweiten Resonanzfrequenz der Straßenbeleuchtungseinrichtung, wobei aufgrund der Anordnung der Dämpfermasse des ersten Schwingungsdämpfungselements in einem der mit Flüssigkeit befüllten Behälter des zweiten Schwingungsdämpfungselements ein dynamisch ausgebildetes erstes Schwingungdämpfungselement bereitgestellt ist.

Die vorbeschriebene Kombination von erstem Schwingungsdämpfungselement zur Dämpfung des Obertons der Straßenbeleuchtungseinrichtung und zweitem Schwingungsdämpfungselement zur Dämpfung des Grundtons der Straßenbeleuchtungseinrichtung zu einer gemeinsamen Schwingungsdämpfungseinheit stellt in vorteilhafter Weise einen Schwingungsdämpfer zur Verfügung, der eine Abdämpfung der Straßenbeleuchtungseinrichtung in einem breiten Frequenzspektrum, das heißt sowohl im Bereich der ersten Resonanzfrequenz als auch im Bereich der zweiten Resonanzfrequenz ermöglicht. Dabei dient das zweite Schwingungsdämpfungselement zur Dämpfung von Niederfrequenzen, das heißt von Frequenzen von unter ca. 3 Hertz, und das erste Schwingungsdämpfungselement zur Dämpfung von Hochfrequenzen, das heißt von Frequenzen von über ca. 8 Hertz.

Für die Gesamtkonstruktion der aus erstem und zweitem Schwingungsdämpfungselement gebildeten Schwingungsdämpfungseinheit gilt, daß die Eintauchtiefe der Dämpfermasse des ersten Schwingungsdämpfungselements in die Flüssigkeit des zweiten Schwingungsdämpfungselements maximal 50 % der Flüssigkeitsfüllhöhe und zwischen 25 % und 50 % der Dämpfermasse betragen sollte. Maßgebliche Größen für die Auslegung des zweiten Schwingungsdämpfungselements sind Behältergröße und Flüssigkeitsfüllhöhe, wobei sich die Auslegung des zweiten Schwingungsdämpfungselements durch die zusätzliche Anordnung der Dämpfermasse des ersten Schwingungsdämpfungselements in einem der mit Flüssigkeit befüllten Behälter des zweiten Schwingungsdämpfungselements im wesentlichen nicht beeinträchtigt wird.

Die optimale Pendelfrequenz des ersten Schwingungsdämpfungselements kann wie folgt berechnet werden:

$$f_e = \frac{1}{1 + \left(\dfrac{m_p}{M_S}\right)} \cdot f_S$$

fe = Eigenfrequenz des Pendels;

$m_p$ = Dämpfermasse;

$M_S$ = generalisierte Masse des zu dämpfenden Systems und

fs = Eigenfrequenz des zu dämpfenden Systems.

Eine Abweichung von +/- 5 % von der erreichten Pendelfrequenz ist dabei unkritisch, da in diesem Bereich der Wirkungsgrad des Dämpfers nicht signifikant nachläßt. Die effektive Dämpfung des als Pendel ausgebildeten ersten Schwingungsdämpfungselements kann wie folgt abgeschätzt werden:

$$\delta_{eff} = F \cdot \frac{\pi}{\sqrt{1 + \dfrac{2}{\left(\dfrac{m_p}{M_S}\right)}}}$$

worin der Faktor F anhand von Versuchen mit 0,5 empirisch ermittelt wurde.

Zur Erzielung einer Dämpfung einer Straßenbeleuchtungseinrichtung in einem breiten Frequenzspektrum, das sowohl die erste als auch die zweite Resonanzfrequenz der Straßenbeleuchtungseinrichtung abdeckt, ist die mit der Erfindung vorgeschlagene Schwingungsdämpfungseinheit aus einem ersten Schwingungsdämpfungselement und einem zweiten Schwingungsdämpfungselement gebildet. Das zweite Schwingungsdämpfungselement ist ein Flüssigkeits-Schwingungsdämpfungselement, welches aus mit Flüssigkeit befüllten Behältern gebildet ist. Durch dieses Schwingungsdämpfungselement wird die Straßenbeleuchtungseinrichtung im Bereich ihrer ersten Resonanzfrequenz gedämpft. Das erste Schwingungsdämpfungselement dient der Dämpfung der Straßenbeleuchtungseinrichtung im Bereich der zweiten Resonanzfrequenz der Straßenbeleuchtungseinrichtung und umfaßt eine schwingend gelagert angeordnete Dämpfermasse, die in die Flüssigkeit einer der mit Flüssigkeit befüllten Behälter des ersten Schwingungsdämpfungselements eingetaucht ist. Dabei sollte die Eintauchtiefe der Dämpfermasse maximal 50 % der Füllhöhe und zwischen 25 % und 50 % der Dämpfermasse betragen.

Die aus erstem und zweitem Schwingungsdämpfungselement gebildete Schwingungsdämpfungseinheit ist in einer zur Erreichung einer optimierten Schwingungsdämpfung günstigen Position an der Straßenbeleuchtungseinrichtung angeordnet, wobei die Schwingungsdämpfungseinheit derart an der Straßenbeleuchtungseinrichtung angeordnet sein sollte, daß auftretende Schwingbewegungen der Straßenbeleuchtungseinrichtung weitestgehend abgedämpft werden und eine Zerstörung der Leuchtmittel wirkungsvoll verhindert wird. In bevorzugter Weise ist die Schwingungsdämpfungseinheit zu diesem Zweck am Mast der Straßenbeleuchtungseinrichtung in nächster Nähe zu den Leuchtmitteln angeordnet. Im Sinne der Erfindung ist hierunter zu verstehen, daß die Schwingungsdämpfungseinheit vorzugsweise am Mast der Straßenbeleuchtungseinrichtung bei gleichzeitiger Nähe zu den vor einer Zerstörung zu bewahrenden Leuchtmitteln angeordnet ist. Hierbei sind für die Anordnung der Schwingungsdämpfungseinheit im wesentlichen zwei Aspekte von Bedeutung. Zum einen ist die Schwingungsdämpfungseinheit in möglichst großer Höhe über dem Erdboden der Straßenbeleuchtungseinrichtung anzuordnen, weil nur dann eine maximale Abdämpfung der Schwingbewegung bei kleinstmöglicher Dämpferabmessung (für den 1. Ton) möglich ist, zum anderen ist eine sichere Befestigung der Schwingungsdämpfungseinheit an der Straßenbeleuchtungseinrichtung zu gewährleisten, so daß sich diese nicht ungewollt von der Straßenbeleuchtungseinrichtung ablöst. Als bevorzugter Ort der Anordnung hat sich unter Berücksichtigung dieser beiden Aspekte der Mast der Straßenbeleuchtungseinrichtung als vorteilhaft erwiesen. Um eine möglichst hohe Dämpfungswirkung für den 1. Ton zu erreichen, ist die Schwingungsdämpfungseinheit in möglichst großer Höhe über dem Erdboden an der Straßenbeleuchtungseinrichtung anzuordnen, woraus sich eine Anordnung der Schwingungsdämpfungseinheit in nächster Nähe zu den Leuchtmitteln ergibt.

Von Vorteil der vorbeschriebenen Schwingungsdämpfungseinheit ist des weiteren, daß diese auf einfache Weise auch im Sinne einer Nachrüstung an bereits installierte Straßenbeleuchtungseinrichtungen angeordnet werden kann.

Das zweite Schwingungsdämpfungselement zur Dämpfung der ersten Resonanzfrequenz der Straßenbeleuchtungseinrichtung ist gemäß einem besonderen Merkmal der Erfindung ringförmig ausgestaltet, wobei die Behälter durch Unterteilung des Ringraumes in einzelne Segmente gebildet sind. Diese Art der Ausgestaltung hat sich insbesondere als vorteilhaft erwiesen, da unabhängig vom Ort der Schwingungsanregung, das heißt unabhängig von der sich ausbildenden Schwingungsachse, eine Dämpfung der auftretenden Schwingbewegungen in jedem Fall gewährleistet ist. In vorteilhafter Weise kann durch diese Anordnung mithin in jedem Fall eine Schwingungsdämpfung sichergestellt werden. Auch ist es natürlich möglich, nur einen Behälter vorzusehen, der dann nicht ringförmig ausgebildet sein muß.

Zur Ausbildung der einzelnen Behälter kann vorgesehen sein, einen kontinuierlich verlaufenden Ringraum auszubilden und diesen dann mittels Zwischenschaltung radial verlaufender Trennwände in einzelne Segmente abzuteilen. Die sich so ergebenden Segmente stellen dann jeweils einen mit Flüssigkeit zu füllenden Behälter dar. Alternativ hierzu kann auch vorgesehen sein, vorausgebildete Behälter zu einem ringförmig ausgebildeten Schwingungsdämpfungselement zusammenzusetzen. Zur Erzielung eines in jede Richtung möglichst gleichwirkenden Dämpfungsverhaltens sind die einzelnen Behälter des zweiten Schwingungsdämpfungselements in etwa gleich groß ausgebildet. Vorgesehen sein kann beispielsweise ein Ringraum, der in 8, 6 oder 4 Segmente unterteilt ist.

Gemäß einem alternativen Vorschlag der Erfindung kann auch vorgesehen sein, anstelle eines ringförmig ausgebildeten zweiten Schwingungsdämpfungselements mehrere Einzelbehälter auszubilden, die mittels einer zugehörigen Halteeinrichtung an der Straßenbeleuchtungseinrichtung angeordnet sind und gemeinsam das zweite Schwingungsdämpfungselement ausbilden. Derlei Behälter können beispielsweise einen rechteckförmigen Querschnitt aufweisen und bezüglich aller vier Himmelsrichtungen an der Straßenbeleuchtungseinrichtung angeordnet sein. Für die Anordnung mehrerer Behälter kann eine gemeinsame Halteeinrichtung vorgesehen sein, die für jeden einzelnen Behälter eine separate Aufnahme aufweist. Vorzugsweise ist die Halteeinrichtung als Klemmeinrichtung ausgestaltet, die auf einfache Weise beispielsweise an den Mast der Straßenbeleuchtungseinrichtung angeklemmt werden kann. In den von der Halteeinrichtung bereitgestellten Behälteraufnahmen können die Behälter dann entsprechend eingesetzt und gesichert werden. Eine Befüllung der Behälter mit Flüssigkeit kann dabei sowohl vor einer Montage als auch nach einer Montage des zweiten Schwingungsdämpfungselements erfolgen. Zur Vereinfachung der Montage hat es sich jedoch als vorteilhaft herausgestellt, eine Befüllung der Behälter bereits vor einer Montage des Schwingungsdämpfungselements vorzunehmen, so daß nach einer Anordnung desselben an einer Straßenbeleuchtungseinrichtung die Montagearbeit abgeschlossen ist.

Als vorteilhaft hat sich zudem herausgestellt, die Behälter nur so weit mit einer Flüssigkeit zu befüllen, daß in jedem Fall die Ausbildung einer Schwappwelle möglich ist. Sind die Behälter mit einer zu großen Menge an Flüssigkeit befüllt, so kann der Wellenkamm, der sich infolge einer Anregung ergebenden Schwappwelle unter Umständen an die Behälterabdeckung schlagen, bevor es zu einer vollständigen Ausbildung der Schwappwelle gekommen ist. In diesem Fall kann die maximal erreichbare Dämpfung nicht erzielt werden. Dasselbe gilt für eine zu niedrige Befüllung des Behälterinnenraums. In diesem Fall würde die Schwappwelle zwar nicht an die Behälterabdeckung anschlagen, doch würde sich aufgrund des zu niedrigen Flüssigkeitsspiegels innerhalb des Behälters eine nicht so große Schwappwelle ausbilden können, wie dies aufgrund der auftretenden Schwingung möglich wäre. Auch in diesem Fall kommt es dann nicht zu einer maximal möglichen Abdämpfung. Die Behälter sind mithin so weit mit Flüssigkeit zu befüllen, daß zum einen die Ausbildung einer Schwappwelle in einer an die auftretende Schwingung angepaßten Größe möglich ist und daß eine solch ausgebildete Schwappwelle nicht schon vor Erreichen der das Behälterende definierenden Behälterwand an der Behälterabdeckung anschlägt.

Das vorzugsweise als Pendel ausgebildete erste Schwingungsdämpfungselement kann hängend an der Behälterabdeckung einer der Behälter des zweiten Schwingungsdämpfungselements angeordnet sein. Auch eine stehende Ausbildung des Pendels ist denkbar, wobei in diesem Fall das Schwingungselement des Pendels aufrechtstehend im Boden einer der Behälter des zweiten Schwingungsdämpfungselements verankert ist.

Weitere Merkmale und Vorteile der Erfindung ergeben sich aus der Beschreibung anhand der Figuren. Dabei zeigen:

Fig. 1    in einer schematischen Seitenansicht eine mit Straßenbeleuchtungseinrichtungen versehene Brücke;

Fig. 2    in einer schematischen Seitenansicht die Ausgestaltung einer Straßenbeleuchtungs-einrichtung gemäß einer ersten Ausfüh-rungsform;

Fig. 3    in einer schematischen Seitenansicht die Ausgestaltung einer Straßenbeleuchtungs-einrichtung gemäß einer zweiten Ausfüh-rungsform;

Fig. 4    in einer schematischen Draufsicht von oben ein ringförmig ausgebildetes Schwingungsdämpfungselement zur Dämpfung der ersten Resonanzfrequenz einer Straßenbeleuch-tungseinrichtung gemäß einer ersten Aus-führungsform;

Fig. 5    in einer schematischen Draufsicht von oben ein ringförmig ausgestaltetes Schwingungsdämpfungselement zur Dämpfung der ersten Resonanzfrequenz einer Straßenbeleuch-tungseinrichtung gemäß einer zweiten Aus-führungsform;

Fig. 6    in einer schematischen Draufsicht von oben ein nicht ringförmig ausgebildetes Schwingungsdämpfungselement zur Dämpfung der ersten Resonanzfrequenz einer Straßenbeleuchtungseinrichtung;

Fig. 7    in einer schematischen Prinzipdarstellung den Pendel eines Schwingungsdämpfungselements zur Dämpfung der zweiten Reso-nanzfrequenz einer Straßenbeleuchtungs-einrichtung;

Fig. 8    in einer schematischen Ansicht eine aus er-stem und zweitem Schwingungsdämpfungs-element gebildeten Schwingungsdämp-fungseinheit;

Fig. 9    in einer geschnittenen Seitenansicht die Schwingungsdämpfungseinheit gemäß Fig. 8 in einer ersten Ausführungsform und

Fig. 10   in einer geschnittenen Seitenansicht die Schwingungsdämpfungseinheit gemäß Fig. 8 in einer zweiten Ausführungsform.

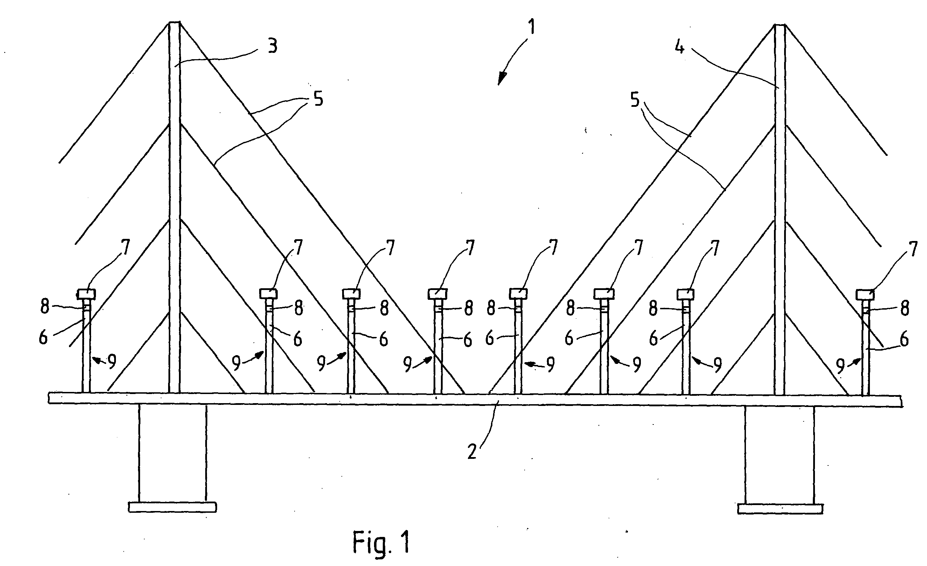

Fig. 1 zeigt in einer schematischen Seitenansicht die Anordnung mehrerer Straßenlaternen 9 auf einer Brücke 1.

Die Brücke 1 weist eine Fahrbahn 2 auf, die beispielsweise unterteilt ist in eine Fahrbahn für Kraftfahrzeuge und einen Fuß- oder Radweg. Mittels der Pilone 3 und 4 wird die Fahrbahn 2 über die Spannseile 5 gehalten.

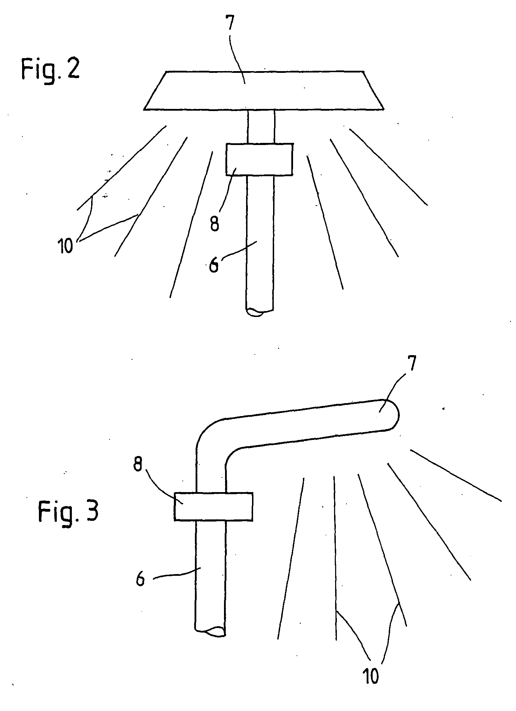

Die Straßenlaternen 9 dienen der Ausleuchtung der Fahrbahn 2 und verfügen über einen Mast 6 sowie kopfseitig am Mast angeordnete Kopfelemente 7. Die Kopfelemente 7 tragen ein oder mehrere Leuchtmittel in Form von beispielsweise Fadenglühbirnen und können unterschiedlichst ausgebildet sein, wie beispielhaft den Fign. 2 und 3 zu entnehmen ist.

Je nach Ausgestaltung der Straßenlaternen 9 können die Masten 6 eine Höhe von bis zu sechs Meter oder mehr aufweisen. Die infolge einer äußeren Anregung, beispielsweise durch Wind oder Regen, auftretenden Schwingbewegungen der Masten 6 können in nachteiliger Weise zu einer derart großen mechanischen Belastung insbesondere der im Kopfelement 7 angeordneten Leuchtmittel führen, daß diese zerstört werden, beispielsweise dadurch, daß bei Verwendung von Fadenglühbirnen als Leuchtmittel der Faden der Glühbirne reißt. Um dies zu verhindern, ist erfindungsgemäß für jede Straßenlaterne eine Schwingungsdämpfungseinheit 8 vorgesehen, die am Mast 6 in unmittelbarer Nähe des Kopfelements 7 der Straßenlaterne 9 angeordnet ist. Vorzugsweise ist die Schwingungsdämpfungseinheit 8 derart ausgebildet, daß sie zumindest die zweite Resonanzfrequenz der Straßenbeleuchtungseinrichtung abdämpft.

Bevorzugterweise ist jedoch vorgesehen, daß die Dämpfungseinheit 8 sowohl die erste als auch die zweite Resonanzfrequenz, das heißt den Grund- sowie den Oberton der Straßenbeleuchtungseinrichtung abdämpft, so daß die mechanische Krafteinwirkung auf das Kopfelement 7 und die daran angeordneten Leuchtmittel so weit reduziert wird, daß eine Zerstörung der Leuchtmittel in vorteilhafter Weise vermieden wird.

Die Fign. 2 und 3 zeigen jeweils eine besondere Ausgestaltung des Kopfelements 7. Fig. 2 zeigt unter Einbeziehung des Mastes 6 eine T-förmige Ausgestaltung des Kopfelements 7, wohingegen Fig. 3 eine L-förmige Ausgestaltung zeigt. Bei der Ausgestaltung nach Fig. 2 wird Licht 10 zu beiden Seiten des Mastes 6 abgestrahlt, wohingegen gemäß der Ausführungsform nach Fig. 3 Licht 10 bezogen auf die Zeichnungsebene nur rechtsseitig des Mastes abgegeben wird. Die Ausgestaltungsform nach Fig. 2 ist besonders dann vorteilhaft, wenn eine Ausleuchtung sowohl links- als auch rechtsseitig der Straßenlaterne 9 zu erfolgen hat, was beispielsweise dann der Fall ist, wenn die Straßenlaterne 9 zwischen zwei Fahrbahnen angeordnet ist. Die Ausbildung des Kopfelements 7 gemäß der Ausführungsform nach Fig. 3 eignet sich hingegen insbesondere dann, wenn die Straßenlaterne 9 randseitig einer Fahrbahn angeordnet ist und eine Ausleuchtung nur dieser einen Fahrbahn erforderlich ist. Es versteht sich jedoch von selbst, daß die Ausgestaltung der erfindungsgemäßen Vorrichtung im Zusammenhang mit jeder beliebigen Ausgestaltungsform des Kopfelements 7 verwendet werden kann und es für die Anordnung der Vorrichtung nicht auf die Ausgestaltungsform des Kopfelements 7 ankommt.

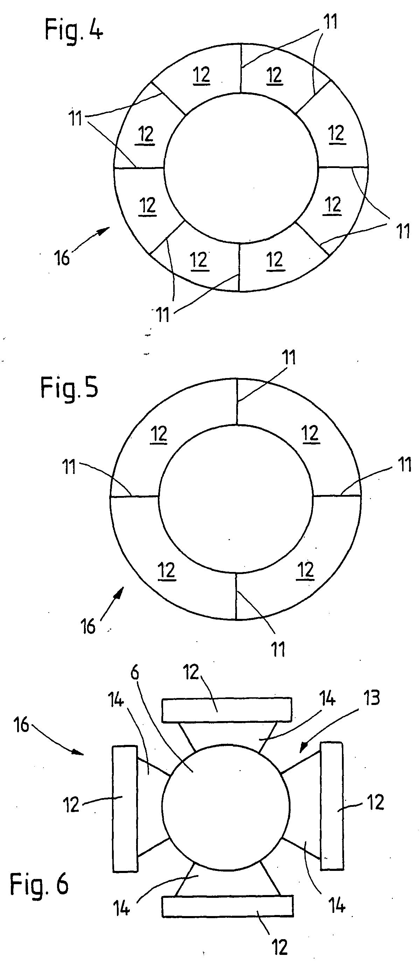

Wie insbesondere den Fign. 2 und 3 entnommen werden kann, ist am Mast 6 der Straßenlaterne 9 in unmittelbarer Nähe des Kopfelements 7 eine Schwingungsdämpfungseinheit 8 angeordnet. Die Schwingungsdämpfereinheit 8 ist gemäß der in den Fign. als besonders vorteilhaft beschriebenen Ausgestaltungsform aus einem ersten Schwingungsdämpfungselement 15 zur Dämpfung der zweiten Resonanzfrequenz der Straßenbeleuchtungseinrichtung und einem zweiten, weiteren Schwingungsdämpfungselement 16 zur Dämpfung der ersten Resonanzfrequenz der Straßenbeleuchtungseinrichtung gebildet, wie anhand der nachfolgenden Fign. 4 bis 10 im weiteren beschrieben.

In einer schematischen Draufsicht von oben zeigen die Fign. 4 und 5 jeweils eine beispielhafte Ausgestaltungsform eines ringförmig ausgebildeten weiteren Schwingungsdämpfungselements 16. Den im wesentlichen kreisförmig ausgebildeten Mast 6 umgibt das ringförmig ausgebildete weitere Schwingungsdämpfungselement 16 vollständig und ist an diesem mittels in den Fign. nicht dargestellten Befestigungsmittel angeordnet. Der sich ergebende Ringraum des Schwingungsdämpfungselements 16 ist durch radial verlaufende Trennwände 11 in einzelne Segmente unterteilt, die jeweils für sich geschlossene Behälter 12 bilden. Diese Behälter 12 sind jeweils mit einer Flüssigkeit befüllt, beispielsweise Wasser, die im Falle einer auftretenden Schwingbewegung des Mastes 6 in Bewegung versetzt wird und in jedem der Behälter 12 infolge der auftretenden Schwingbewegung eine sogenannte Schwappwelle ausbildet. Diese Schwappwelle breitet sich auf der Flüssigkeitsoberfläche innerhalb eines jeden Behälters 12 aus und zerplatzt nach Erreichen des Behälterendes an der dort angeordneten Trennwand 11. Dabei wird im Augenblick des Auftreffens der Schwappwelle auf die jeweilige Behälterwand der größte Teil der auf die Welle übertragenden Schwingungsenergie dissipiert. In der Konsequenz ergibt sich eine durch das weitere Schwingungsdämpfungselement 16 abgedämpfte Schwingbewegung des Mastes 6. Die auf das Kopfelement 7 und damit auf die innerhalb des Kopfelements 7 angeordneten Leuchtmittel übertragene mechanische Energie kann so in vorteilhafter Weise auf ein Minimum reduziert werden, was in vorteilhafter Weise dazu führt, daß eine Zerstörung der Leuchtmittel vermieden werden kann.

Das vorbeschriebene weitere Schwingungsdämpfungselement 16 wirkt im unteren Frequenzbereich der Straßenbeleuchtungseinrichtung, das heißt in einem Frequenzbereich von unter 3 Hertz. Abgedämpft durch das weitere Schwingungsdämpfungselement 16 werden mithin Frequenzen im Bereich der ersten Resonanzfrequenz der Straßenbeleuchtungseinrichtung.

In Abhängigkeit der Richtung, aus welcher die Schwinganregung des Mastes 6 erfolgt, ergibt sich ein entsprechender Verlauf der Schwingungsachse. Die ringförmige Ausgestaltung des weiteren Schwingungsdämpfungselements 16 hat dabei den Vorteil, daß unabhängig von der Lage der Schwingungsachse in jedem Fall eine Dämpfung der Schwingbewegung des Mastes 6 erfolgen kann. Zwar wird die Flüssigkeit in denjenigen Behältern 12, die senkrecht zur Schwingungsachse liegen, keinen wesentlichen Beitrag zur Abdämpfung der Schwingbewegung beitragen können, doch ergibt sich im Gegenzug ein maximaler Beitrag aus denjenigen Behältern 12, die in Längsrichtung der Schwingungsachse liegen.

Um sicherzustellen, daß unabhängig von der Lage der jeweiligen Schwingungsachse in jedem Fall eine vorhersehbare und gleichförmige Schwingungsdämpfung erfolgen kann, sind die einzelnen Behälter 12 gleich groß ausgestaltet. Die Ausführungsformen nach Fign. 4 und 5 unterscheiden sich dabei hinsichtlich der Anzahl und der Größe der jeweils vorgesehenen Behälter 12, wobei Fig. 4 die Anordnung von acht Behältern und Fig. 5 die Anordnung von vier Behältern zeigt. Untersuchungen haben ergeben, daß die Anordnung von nur vier Behältern eine gegenüber der Anordnung von acht Behältern verbesserte Dämpfung ermöglicht.

Fig. 6 zeigt in einer alternativen Ausgestaltungsform die Ausbildung eines nicht ringförmig ausgebildeten weiteren Schwingungsdämpfungselements 16. Dieses besteht aus insgesamt vier Behältern 12, die einen jeweils rechteckförmigen Querschnitt aufweisen und mittels einer gemeinsamen Halteeinrichtung 13 am Mast 6 der Straßenlaterne 9 angeordnet sind. Vorzugsweise ist die Halteeinrichtung 13 eine bezüglich des Mastes ausgebildete Klemmvorrichtung, die an diesem durch eine einfache Montage angeordnet werden kann. Die Halteeinrichtung 13 verfügt über eine die Anzahl der anzuordnenden Behälter 12 entsprechende Anzahl an Aufnahmen 14, in die die Behälter 12 zur Anordnung am Mast zu befestigen sind.

Die einzelnen Behälter 12 sind unter Verwendung der Halteeinrichtung 13 derart am Mast 6 angeordnet, daß bezüglich jeder Himmelsrichtung ein Behälter 12 vorgesehen ist.

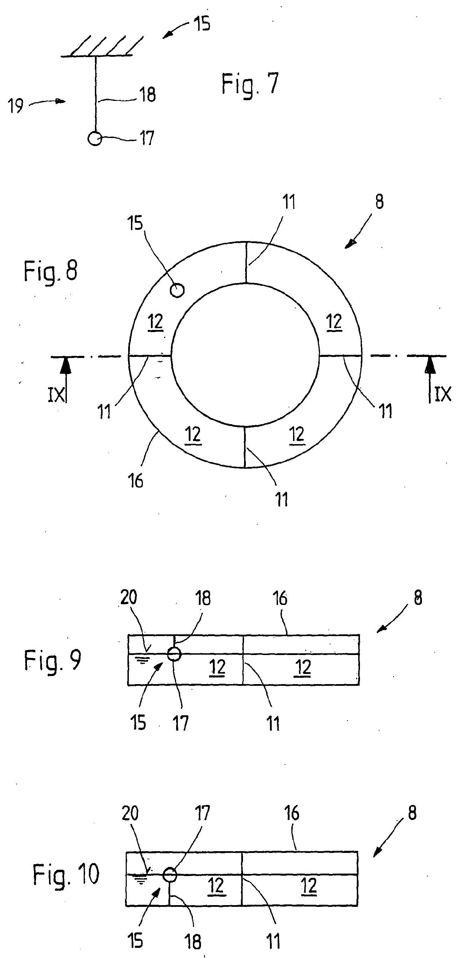

Das Schwingungsdämpfungselement 15 zur Dämpfung der zweiten Resonanzfrequenz der Straßenbeleuchtungseinrichtung 9 ist in einer schematischen Prinzipskizze in Fig. 7 gezeigt. Gebildet ist das Schwingungsdämpfungselement 15 nach Art eines Pendels 19, wobei das Schwingungsdämpfungselement 15 eine Dämpfermasse 17 umfaßt, die zwecks schwingend gelagerter Anordnung endseitig eines Schwingungselements 18 angeordnet ist. In dem in Fig. 7 gezeigten Ausführungsbeispiel ist das Schwingungselement 18 als Biegefeder ausgebildet, kann aber auch die Gestalt eines entsprechend ausgebildeten Seils oder Fadens aufweisen, an welchem die Dämpfermasse 17 endseitig aufgehängt ist.

Das Schwingungsdämpfungselement 15 bewirkt eine Dämpfung der Straßenbeleuchtungseinrichtung 9 im Hochfrequenzbereich, das heißt im Bereich der zweiten Resonanzfrequenz der Straßenbeleuchtungseinrichtung 9 bei ca. 10 Hertz, wenn die Dämpfermasse 17 in Flüssigkeit, wie in den Fign. 8 bis 10 gezeigt, eingetaucht ist.

Angeordnet wird das Schwingungselement 15 in einem der mit Flüssigkeit befüllten Behälter 12 des Schwingungsdämpfungselements 16, und zwar derart, daß die Dämpfermasse 17 in die Flüssigkeit dieses Behälters, vorzugsweise zu 50 %, eintaucht. Gebildet wird auf diese Weise nicht nur ein dynamisches Schwingungselement 16, sondern auch ein dynamisches Schwingungselement 15, so daß die auf diese Weise ausgebildete Schwingungsdämpfungseinheit 8 für in ihrer Form und Größe unterschiedlich ausgebildete Straßenbeleuchtungseinrichtungen 9 in gleicher Weise wirkungsvoll verwendbar ist.

Eine aus erstem Schwingungsdämpfungselement 15 und zweitem Schwingungsdämpfungselement 16 gebildete Schwingungsdämpfungseinheit 8 zeigen die Fign. 8 bis 10.

Für eine optimale Dämpfungswirkung ist die Dämpfermasse 17 bis zur maximal 50 %igen Füllhöhe der Flüssigkeit in dieser einzutauchen. Zu entnehmen ist dieser Sachzusammenhang insbesondere den Fign. 9 und 10, in welchen die Füllhöhe der Behälter 12 mit 19 bezeichnet ist.

Das Ausführungsbeispiel nach Fig. 9 zeigt eine erste Ausführungsform des Schwingungsdämpfungselements 15, gemäß welcher das Schwingungsdämpfungselement 15 als hängendes Pendel 19 ausgebildet ist. Fig. 10 ist eine Ausführungsform zu entnehmen, wonach das Schwingungsdämpfungselement 15 als stehendes Pendel 19 ausgebildet ist. Das Schwingungselement 18 ist gemäß dieser Ausführungsform bevorzugterweise als Federelement, beispielsweise als Biegefeder, ausgebildet. Bei der hängenden Ausführungsform des Pendels 19 nach Fig. 9 kann das Schwingungselement 18 als Federelement oder als entsprechend ausgebildetes Seil, ähnlich einer Biegefeder, ausgebildet sein.

Die vorstehende Beschreibung dient ausschließlich der beispielhaften Erläuterung und ist in keinster Weise beschränkend. Insbesondere ist die Anordnung oder Ausbildung der Schwingungsdämpfungseinheit 8 nicht durch die Ausgestaltung der Straßenlaterne 9, das heißt durch den Masten 6 oder das Kopfelement 7, eingeschränkt. Die in Fign. 1 bis 10 gezeigten Ausführungsformen sind schematisch dargestellt und nicht maßstabsgetreu. Auch sind andere als die gezeigten Ausführungsformen von Schwingungsdämpfungselement 15 und Schwingungsdämpfungselement 16 möglich. So kann beispielsweise auch nur ein Behälter vorgesehen sein. Dieser eine Behälter 12 bildet dann das weitere Schwingungsdämpfungselement 16. In die in dem einen Behälter 12 befindliche Flüssigkeit wird, wie vorstehend beschrieben, die Dämpfermasse 17 des ersten Schwingungsdämpfungselementes 15 eingetaucht. Zusammen bilden dann das aus nur einem Behälter 12 bestehende Schwingungsdämpfungselement 16 und das Schwingungsdämpfungselement 15 die Schwingungsdämpfungseinheit 8.

**Bezugszeichenliste**

| 1 | Brücke |
|---|---|
| 2 | Fahrbahn |
| 3 | Pilon |
| 4 | Pilon |
| 5 | Spannseil |
| 6 | Mast |
| 7 | Kopfelement |
| 8 | Schwingungsdämpfungseinheit |
| 9 | Straßenbeleuchtungseinrichtung |
| 10 | Licht |
| 11 | Trennwand |
| 12 | Behälter |
| 13 | Halteeinrichtung |
| 14 | Aufnahme |
| 15 | Schwingungsdämpfungselement |
| 16 | Schwingungsdämpfungselement |
| 17 | Dämpfermasse |
| 18 | Schwingungselement |
| 19 | Pendel |
| 20 | Flüssigkeitsstand |

**Patentansprüche**

1. Vorrichtung für die Verlängerung der Standzeit von Leuchtmitteln in Straßenbeleuchtungseinrichtungen (9), insbesondere in Straßenlaternen auf Brükken (1), aufweisend ein Schwingungsdämpfungselement (15), das an der Straßenbeleuchtungseinrichtung (9) angeordnet und die zweite Resonanzfrequenz (Oberton) der Straßenbeleuchtungseinrichtung (9) dämpfend ausgebildet ist.

2. Vorrichtung nach Anspruch 1, **gekennzeichnet durch** ein weiteres Schwingungsdämpfungselement (16), das an der Straßenbeleuchtungseinrichtung (9) angeordnet und die erste Resonanzfrequenz (Grundton) der Straßenbeleuchtungseinrichtung (9) dämpfend ausgebildet ist.

3. Vorrichtung nach einem der Ansprüche 1 oder 2, **dadurch gekennzeichnet, daß** das Schwingungsdämpfungselement (15) und das weitere Schwingungsdämpfungselement (16) zu einer die erste und die zweite Resonanzfrequenz der Straßenbeleuchtungseinrichtung (9) dämpfenden Schwingungsdämpfungseinheit (8) kombiniert sind.

4. Vorrichtung nach Anspruch 3, **dadurch gekennzeichnet, daß** die Schwingungsdämpfungseinheit (8) in einer zur Erreichung einer optimierten Schwingungsdämpfung von erster und zweiter Resonanzfrequenz der Straßenbeleuchtungseinrichtung (9) günstigen Position an der Straßenbeleuchtungseinrichtung (9) angeordnet ist.

5. Vorrichtung nach Anspruch 4, **dadurch gekennzeichnet, daß** die Schwingungsdämpfungseinheit (8) am Mast der Straßenbeleuchtungseinrichtung (9), vorzugsweise in nächster Nähe zu dem oder den Leuchtmitteln angeordnet ist.

6. Vorrichtung nach einem der Ansprüche 1 bis 5, **dadurch gekennzeichnet, daß** das weitere Schwingungsdämpfungselement (16) zur Dämpfung der ersten Resonanzfrequenz der Straßenbeleuchtungseinrichtung (9) eine Mehrzahl von mit einer Flüssigkeit befüllten Behältern (12) aufweist.

7. Vorrichtung nach Anspruch 6, **dadurch gekennzeichnet, daß** das weitere Schwingungsdämpfungselement (16) ringförmig ausgestaltet ist, wobei die Behälter (12) durch Unterteilung des Ringraumes in einzelne Segmente gebildet sind.

8. Vorrichtung nach Anspruch 7, **dadurch gekennzeichnet, daß** der Ringraum mittels radial verlaufender Trennwände (11) unterteilt ist.

9. Vorrichtung nach einem der Ansprüche 7 oder 8, **dadurch gekennzeichnet, daß** der Ringraum in acht, vorzugsweise in vier Segmente unterteilt ist.

10. Vorrichtung nach Anspruch 6, **dadurch gekennzeichnet, daß** das weitere Schwingungsdämpfungselement (16) aus mehreren separat voneinander angeordneten Behältern (12) gebildet ist.

11. Vorrichtung nach einem der Ansprüche 6 bis 10, **dadurch gekennzeichnet, daß** die Behälter (12) hinsichtlich ihrer geometrischen Ausmaße gleich groß ausgebildet sind.

12. Vorrichtung nach einem der Ansprüche 6 bis 11, **dadurch gekennzeichnet, daß** die Behälter (12) mittels einer zugehörigen Halteeinrichtung (13) an der Straßenbeleuchtungseinrichtung (9), vorzugsweise am Mast (6), angeordnet sind.

13. Vorrichtung nach einem der Ansprüche 6 bis 12, **dadurch gekennzeichnet, daß** für die mehreren Behälter (12) des weiteren Schwingungsdämpfungselements (16) eine gemeinsame Halteeinrichtung (13) vorgesehen ist, die für jeden einzelnen Behälter (12) eine separate Aufnahme (14) aufweist.

14. Vorrichtung nach einem der Ansprüche 1 bis 13, **dadurch gekennzeichnet, daß** das Schwingungsdämpfungselement (15) zur Dämpfung der zweiten Resonanzfrequenz der Straßenbeleuchtungseinrichtung (9) eine schwingend gelagert angeordnete Dämpfermasse (17) aufweist.

15. Vorrichtung nach einem der vorhergehenden Ansprüche, **dadurch gekennzeichnet, daß** das Schwingungsdämpfungselement (15) nach Art eines Pendels (19) ausgebildet ist, wobei die Dämpfermasse (17) zwecks schwingend gelagerter Anordnung endseitig eines Schwingungselements (18) angeordnet ist.

16. Vorrichtung nach einem der vorhergehenden Ansprüche, **dadurch gekennzeichnet, daß** das Schwingungselement (18) samt daran angeordneter Dämpfermasse (17) in einem mit Flüssigkeit befüllten Behälter (12) des weiteren Schwingungsdämpfungselements (16) angeordnet ist.

17. Vorrichtung nach einem der Ansprüche 15 oder 16, **dadurch gekennzeichnet, daß** das Schwingungselement (18) ein Seil oder Faden ist.

18. Vorrichtung nach einem der Ansprüche 15 oder 16, **dadurch gekennzeichnet, daß** das Schwingungselement (18) ein Federelement, vorzugsweise eine Biegefeder ist.

Fig. 1

EP 1 471 303 A2

Fig. 2

Fig. 3

Fig.4

Fig.5

Fig. 6

Fig. 7

Fig. 8

Fig. 9

Fig. 10